# EUROPEAN PATENT APPLICATION

(11) **EP 0 565 281 A2**
(43) Date of publication of application: **13.10.1993**
(21) Application number: 93302326.9
(22) Date of filing: 25.03.1993
(51) Int. Cl.: G11B 20/00, G11B 19/04, G11B 19/02, G11B 23/28, G06K 19/08, G06K 19/12, G06K 19/14, G06F 1/00

(54) **Information handling system incorporated with an information security measure**

(30) Priority: 06.04.1992 JP 113999/92
(71) Applicant: NHK SPRING CO.LTD., Yokohama-shi, Kanagawa-ken (JP)
(72) Inventor: Sugahara, Tsugutaka, Yokohama-shi, Kanagawa-ken (JP); Hoshino, Hidekazu, Yokohama-shi, Kanagawa-ken (JP)
(74) Representative: Browne, Robin Forsythe, Dr.

(57) **Abstract**

In an information handling system such as an information recording system and an information communicating system, illicit use of the information, which is normally recorded in a medium or is being communicated, is effectively prevented by requiring decoding information for the use of the information. The medium for carrying the decoding information is provided separate from medium used for the information to the handled. Alternatively, the decoding information may be recording in a medium provided in a key which allows operation of a part of the system. Preferably, the decoding information is recorded in regions of hologram, diffraction grating or light polarizing material.

## Description

### TECHNICAL FIELD

The present invention relates to an information handling system such as an information recording system and an information communicating system, and in particular to the technology for ensuring t he security of information in such systems.

### BACKGROUND OF THE INVENTION

Conventional, various protective measures have been proposed to prevent unauthorized duplication of information such as programs stored in flexible disks which may be carried out simply by copying the information or by analyzing the contents of the flexible disks. Such measures conventionally consisted of a program which prohibits the access to the contents of the flexible disk by the flexible disk drive unit or rewrites a part of the programs stored in the flexible diskwhen a copying command other than forthe purpose of executing the programs stored in the flexible disk is attempted to be used.

However, in reality, even when such a scheme is employed, it is not possible to prevent all the attempts to analyze the information contained in a flexible disk. Further, it is not possible to prevent simple copying of the contents of one flexible disk to another. In any case, such attempts to make unauthorized copies of flexible disks can be relatively easily carried out by using a relatively inexpensive magnetic reader/writer. This is true not only with those flexible disks storing programs but also with those flexible disks storing data.

Such unauthorized duplication of information can also be attempted when the information is being communicated from a transmitter to a receiver by receiving the information with a different receiver or by illicitly using the proper receiver. Therefore, it has been attempted to encode information that is to be communicated, and to prevent unauthorized use of the receiver by necessitating the use of a key to operate the receiver.

However, such a key can be easily duplicated, and it is not very effective in preventing the unauthorized use of the receiver.

### BRIEF SUMMARY OF THE INVENTION

In view of such problems of the prior art, a primary object of the present invention is to provide an information handling system such as an information recording system and an information communicating system which can effectively prevent unauthorized access to the information which is recorded in a recording medium or being communicated.

A second object of the present invention is to provide an information handling system incorporated with an information security measure which is easy to implement but is highly effective.

These and other objects of the present invention can be accomplished by providing an information handling system incorporated with an information security measure, comprising: first information handling means; encoding means provided in association with the first information handling means for encoding information handled by the first information handling means; decoding information carrying means for carrying decoding information which is needed for decoding the information encoded by the encoding means; second information handling means adapted to handle the information which has been handled by the first information handling means; decoding information reading means provided in association with the second information handling means for reading decoding information from the decoding information carrying means; and decoding means provided in association with the second information handling means for decoding the information which was encoded by the encoding means according to the decoding information carried by the decoding information carrying means; the decoding information carrying means being provided separately from a medium used by the first and second information handling means for handling the information.

Here, "encoding" and "decoding" are meant as words describing all possible modes of mofiying the form of the original information and restoring it to an understandable form, respectively, and "coding" is intended to cover all the possible processes of encrypting, scrambling, and data conversion based on a prescribed convention, among other possibilities.

According to a preferred embodiment of the present invention, the first information handling means consists of a writer for writing the information as coded by the coding means into a first storage medium, and the second information handling means consists of a reader for reading the coded information from the first storage medium, the decoding information carrying means consisting of a second storage medium which is attached to the first storage medium, and cannot be read by the reader but by the decoding information reading means.

Preferably, the first medium consists of a magnetic recording medium, while the second medium consists of an optical recording medium, in particular at least one region defined in association with the first recording medium and having a selective reflectivity. Most preferably, the first storage medium consists of a flexible disk, and the region for the second storage medium is defined on a casing of the flexible disk.

According to another preferred embodiment of the present invention, first information handling means consists of a signal transmitter while the second information handling means consists of a receiver, and the decoding information carrying means is incorporated in key means which allows the use of the receiver. The key means may consist of an ID card, and the decoding information carrying means may consist of decoding information recording means provided in the ID card. Alternatively, the key means may consist of a mechanical key, and the decoding information carrying means may consist of decoding information recording means provided in the ID card.

According to a preferred embodiment of the present invention, the invention consists of an information recording system for writing information into a recording medium with a writer and reading the thus recorded information with a reader, wherein: the information recording medium comprises first information recording means for recording coded information, and second information recording means, different from the first recording means, for recording decoding information needed for decoding the coded information; the writer comprises means for encoding information that is to be recorded in the first recording means; and the reader comprises means for optically accessing the second information recording means and reading the decoding information, and means for decoding the encoded information according to the decoding information read by the reader; the information encoded by the writer being recording in the first recording means, and the reader decoding and producing the information recorded in the first information recording means according to the decoding information recorded in the second recording means. Typically, the second information recording means comprises a plurality of regions each of which represents information by diffracting, reflecting or polarizing incident light into a specific direction.

According to a preferred embodiment of the present invention, the invention consists of an information communicating system for communicating information from transmitting means to receiving means, and producing the transmitted information, comprising: encoding means provided in the transmitting means for encoding information to be communicated; key means provided with optically accessible decoding information recording means for recording decoding information for decoding the coded information; reading means provided in the receiving means for reading the decoding information by optically accessing the decoding information recording means; and decoding means provided in the receiving means for decoding the encoded information according to the decoding information that has been read from the decoding information recording means; the information encoded and transmitted by the transmitting means being received by the receiving means, and decoded and produced by the decoding means according to the decoding information recorded in the decoding information recording means.

Thus, according to the present invention, in order to make an attempt to an unauthorized access to the information, it is necessary to analyze and duplicate the contents of the optically accessible complex information recording means by using an expensive optical information recording system, and the optically accessible information recording means can be made as complex as desired because it can be handled with a dedicated system for each application and there is no need for standardization.

### BRIEF DESCRIPTION OF THE DRAWINGS

Now the present invention is described in the following with reference to the appended drawings, in which:
Figure 1 is a perspective view showing the structure of the information recording system given as a first embodiment of the present invention;
Figure 2 is an enlarged plan view showing only the flexible disk of Figure 1;
Figure 3 is a front view showing the optical head of the optical reader;
Figure 4 is a flow chart showing the operation of the first embodiment;
Figure 5 is a perspective view showing the structure of the information communicating system given as a second embodiment of the present invention;
Figure 6 is an enlarged plan view showing only the ID card of Figure 5;
Figure 7 is a flow chart showing the operation of the second embodiment; and
Figure 8 is an enlarged plan view of an ID key used in a modified embodiment of the second embodiment.

### DETAILED DESCRIPTION OF THE PREFERRED EMBODIMENTS

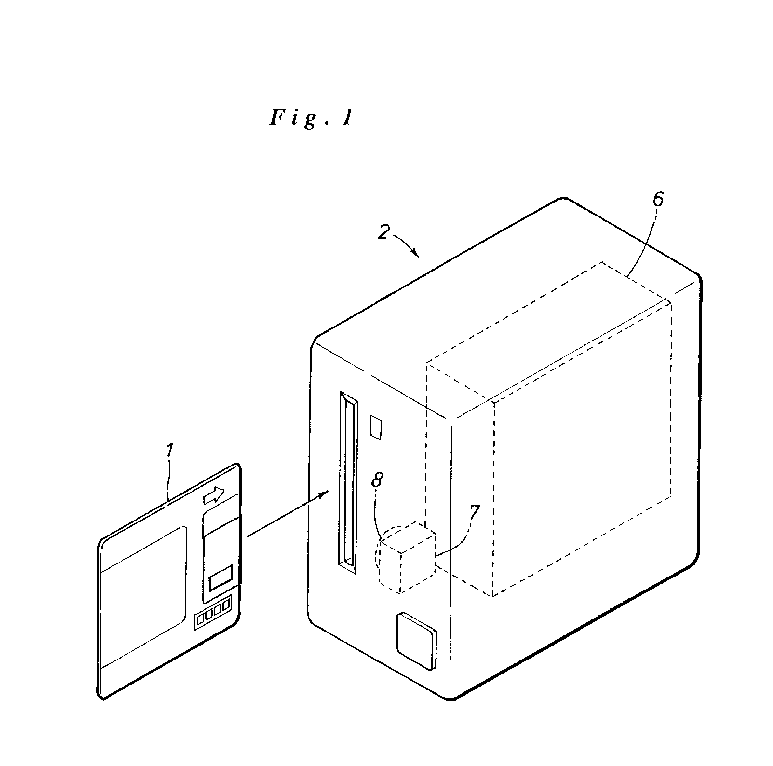

Figure 1 shows a magnetic flexible disk 1, and a reader/writer2 thereforwhich serve as an information recording system given as a first embodiment of the present invention.

The flexible disk 1 comprises a magnetic disk 3 serving as first recording means, and a case 4 enclosing the magnetic disk 3. In a part of the exterior of the case 4 is provided second recording means 5 which can be accessed by an optical reader 7 included in the reader/writer 2 as described hereinafter.

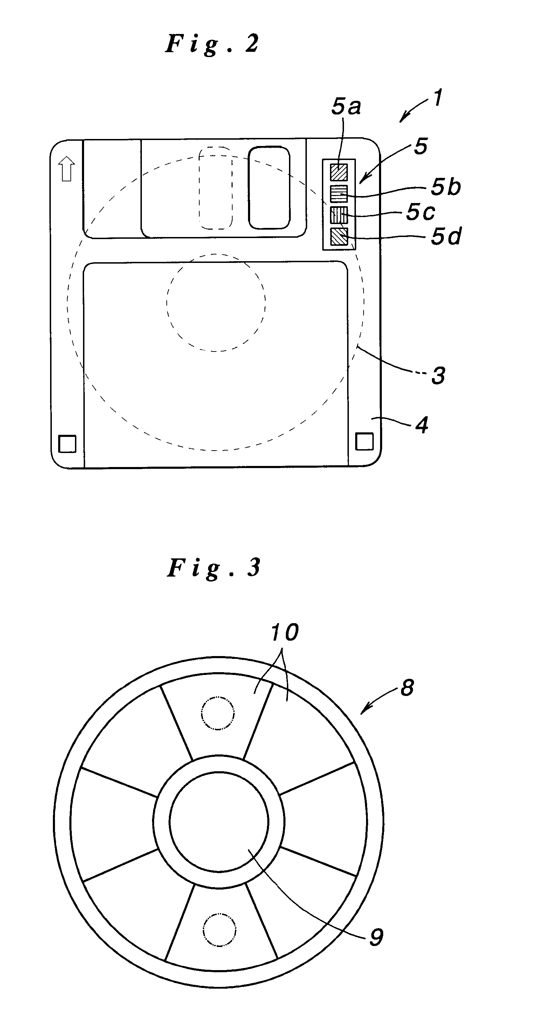

Referring to Figure 2, the second recording means 5 consists of four regions 5a, 5b, 5c and 5d of reflective hologram which are arranged in a row extending in the direction of inserting the flexible disk 1 into the reader/writer 2. These regions 5a, 5b, 5c and 5d each reflect incident light supplied from a light source 9 of the optical reader 7 which is described hereinafter with a unique diffractive property.

Meanwhile, the reader/writer comprises a magnetic read/write unit 6 for encoding the uncoded data according to encoding data stored in the second recording means 5 and writing the encoded data into the magnetic disk 3 under the command from a computer not shown in the drawing, and an optical reader 7 for optically accessing the second recording means 5. This optical reader 7 is provided with an optical head 8 which faces the regions 5a, 5b, 5c and 5d of the second recording means 5 in a sequential manner when the flexible disk 1 is inserted in the reader/writer 2. As illustrated in Figure 3, the optical head 8 comprises a centrally located laser light source 9, and an annular eight-segment photo-diode 10 which surrounds the laser light source 9. Each of the regions 5a, 5b, 5c and 5d of the second recording means 5 reflects the incident light from the laser light source 9 to one or more of the segments of the eight-segment photodiode 10. As a result, from the pattern of light received by the optical head 8 as it faces each of the regions 5a, 5b, 5c and 5d in a sequential manner, digital data, for instance of four bits, can be obtained.

The magnetic data recorded in the magnetic disk 3 of the flexible disk 1 is encoded so as to be decoded according to the data stored in the second recording means 5 by means of a reader/writer having a similar structure as that described above in each case. Therefore, it is not possible to use the magnetic data stored in the magnetic disk 3 without reading the data recorded in the second recording means 5.

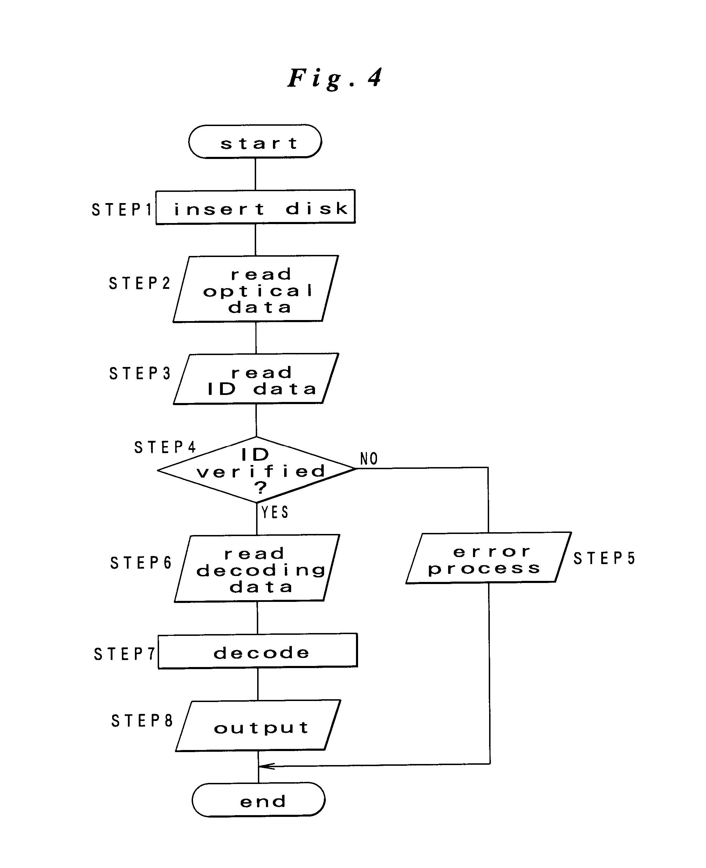

Now the operation of the present embodiment is described in the following with reference to the flow chart of Figure 4. First of all, when the flexible disk 1 is inserted in the reader/writer in step 1, the optical head 8 of the optical reader 7 sequentially accesses the four regions of the second recording means 5 to read the optical data recorded therein in step 2. ID data stored in the magnetic disk 3 is then read in step 3, and this ID is verified by comparing the magnetic data with the optical data in step 4. At this point, if the flexible disk is not determined to be authentic, the program flow advances to step 5 where an error signal is produced, or an error indication is made, and the entire process is ended.

On the other hand, if the flexible disk 1 is determined to be authentic in step 4, the program flow advances to step 6 where the encoded information recorded in the magnetic disk 3 is read, and the decoding process is carried out according to the above mentioned optical data in step 7. The data is then supplied to a computer not shown in the drawing as decoded data in step 8, and this concludes the entire process.

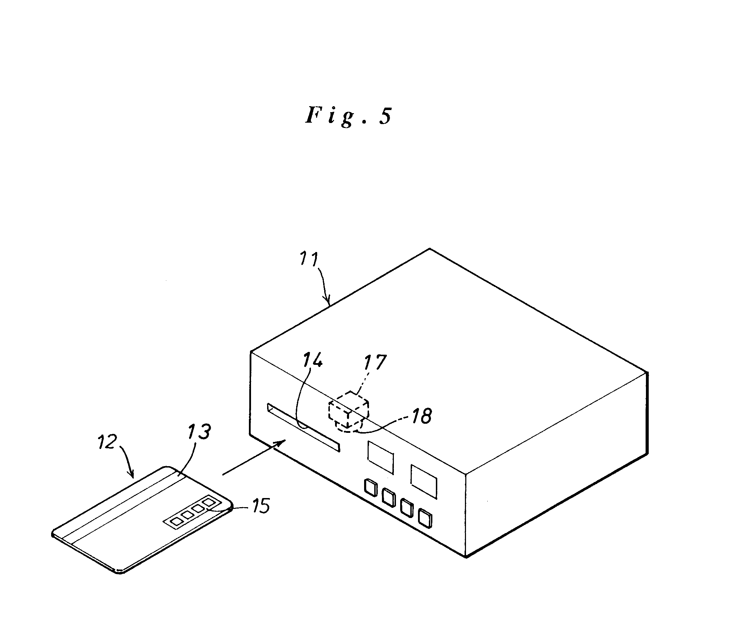

Figure 5 shows a transceiver 11 and an ID card 12 serving as key means in the information communicating system given as a second embodiment of the present invention. The transceiver 11 becomes usable when the operator inserts this ID card 12 in a slot 13 of the transceiver 11.

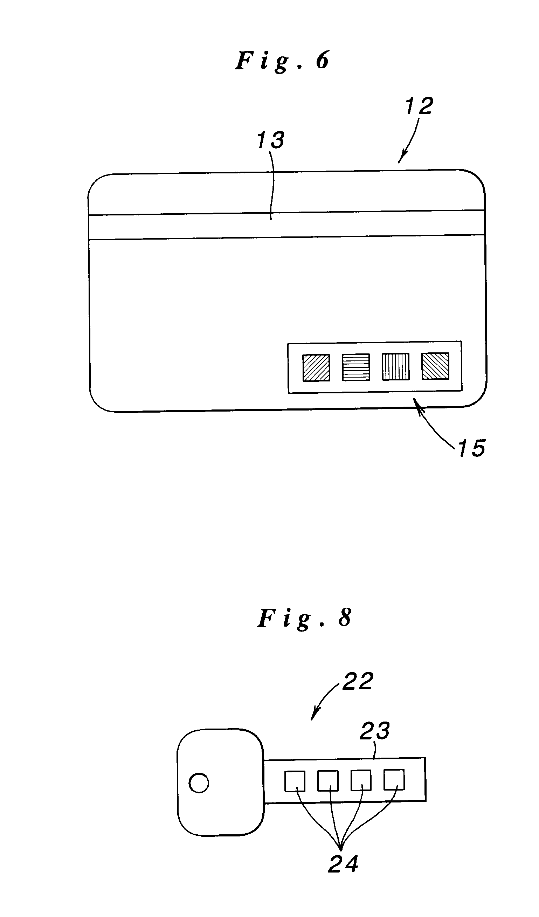

As illustrated in Figure 6, the ID card 12 is provided with first recording means consisting of a conventional magnetic stripe 13 extending in the feeding direction of the card somewhat offset toward one of its long side, and second recording means 15 similar to the second recording means of the first embodiment near a corner of this card. The second recording means 15 records decoding information in an optically accessible manner in the same way as in the first embodiment.

The transceiver 11 is provided with an optical reader 17 for optically accessing the second recording means 15 in addition to a normal communication processing circuit (now shown in the drawing). This optical reader 17 is provided with an optical head 18 similar to that of the first embodiment which can face regions 15a, 15b, 15c and 15d of the second recording means 15 in a sequential manner. The relationship between the different regions 15a, 15b, 15c and 15d of the second recording means 15 and the optical head 18 is similar to that of the first embodiment, and is not described in detail.

The data transmitted from another transceiver is encoded so as to be decoded by the data recorded in the recording means 15. Thus, the received data cannot be used unless the data recorded in the second recording means is read out.

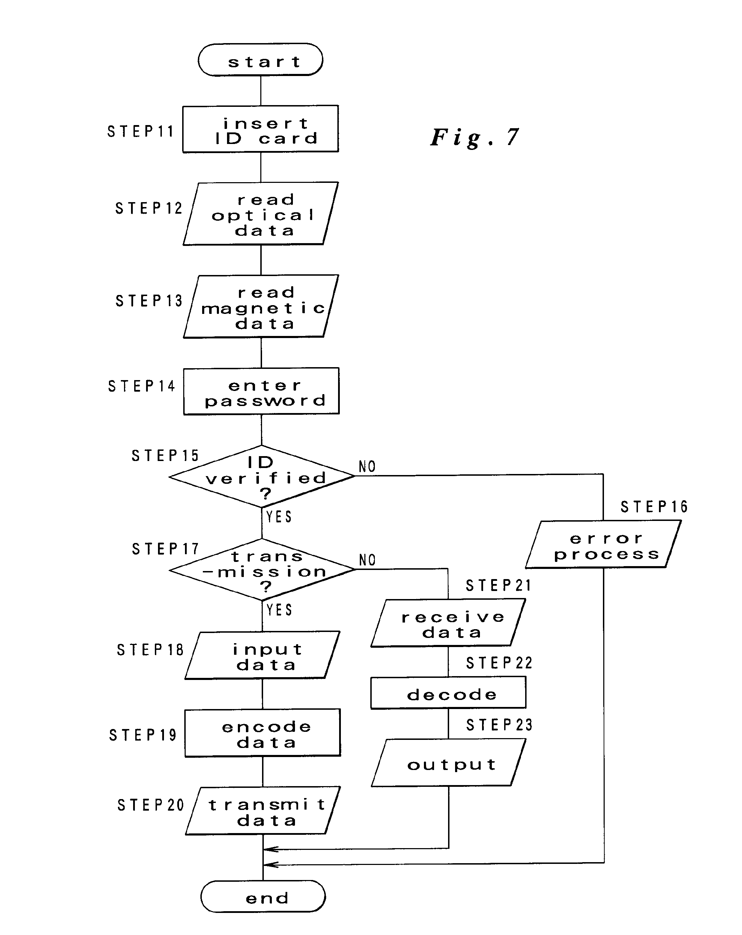

Now the operation of this embodiment is described in the following with reference to the flow chart of Figure 7. First of all, when the ID card 12 is inserted in the transceiver 11 in step 11, the optical head 18 sequentially accesses the second recording means 15 of the ID card 12 and reads data therefrom in step 12. The ID data recorded in the magnetic recording means 13 is then read in step 13, and following the entering of a password from a keyboard orthe like not shown in the drawing in step 14, the optical data and the magnetic data are compared for the verification of the ID in step 15. If the ID card is not determined to be authentic at this point, the program flow advances to step 16 where an error signal is produced or an error indication is made, and the entire process is concluded.

On the other hand, if the ID card 12 is determined to be authentic in step 15, it is determined in step 17 if a signal is to be transmitted or to be received. If a signal is to be transmitted, data to be transmitted is inputted in step 18, and encoded according to the optical encoding data recorded in the recording means 15 in step 19. The data is then transmitted in step 20, and the entire process is concluded. If data is to be received, the data is received in step 21, and decoded according to the optical encoding data recorded in the recording means 15 in step 22. The data is then outputted as decoded data in step 23, and the entire process is concluded.

In the above described embodiment, the key means consisted of an ID card, but may also consist of an ID card 22 illustrated in Figure 8 which comprises a mechanical key part 23, and optical recording means provided on one surface of the key in the same as in the first and second embodiments, and similar results can be effected. The mode of communication may consist of any mode of communication as long as it is suitable for encoding and decoding, and for instance may consist of such modes of communication as normal radio wave digital communication, digital communication using modems via public communication lines, facsimile communication, and on-line communication between computers (which may include hosts and remote terminals), among other possibilities.

The recording medium consisted of a magnetic flexible disk in the first embodiment, but may also consist of other media which are suitable for encoding and decoding, such as optical disks, magneto-optical disks, optical cards, IC cards, magnetic cards and magnetic tapes.

As can be understood from the above description, according to the information recording system and the information communicating system of the present invention, by recording decoding information in optically accessible second recording means provided in a recording medium carrying first recording means for storing coded information that is needed to be decoded, and reading and reproducing the original information with a reader, and by providing key means equipped with an optically accessible decoding information storing means in a receiver for receiving coded information from a transmitter, and incorporating an optical reader in the receiver for reading the decoding information stored in the key means, illicit accessing to the information can be effectively prevented because it is necessary for a person with an intention to illicit access the protected information to use a highly expensive optical information recording system for the purpose of analyzing and duplicating the contents of the optical information recording means. Furthermore, since the optical information recording system may be one dedicated to each particular system, and is not required to be standardized, it is possible to increase the complexity of the contents, and to render any illicit accessing to the data practically impossible, for instance by using a unique formatting system.

Although the present invention has been described in terms of preferred embodiments thereof, it is obvious to a person skilled in the art that various alterations and modifications are possible without departing from the scope of the present invention which is set forth in the appended claims.

## Claims

1. An information handling system incorporated with an information security measure, comprising:
first information handling means;
encoding means provided in association with said first information handling means for encoding information handled by said first information handling means;
decoding information carrying means for carrying decoding information which is needed for decoding said information encoded by said encoding means;
second information handling means adapted to handle said information which has been handled by said first information handling means;
decoding information reading means provided in association with said second information handling means for reading decoding information from said decoding information carrying means; and
decoding means provided in association with said second information handling means for decoding said information which was encoded by said encoding means according to said decoding information carried by said decoding information carrying means;
said decoding information carrying means being provided separately from a medium used by said first and second information handling means for handling said information.

2. An information handling system according to claim 1, wherein said first information handling means consists of a writer for writing said information as coded by said coding means into a first storage medium, and said second information handling means consists of a reader for reading said coded information from said first storage medium, said decoding information carrying means consisting of a second storage medium which is attached to said first storage medium, and cannot be read by said reader but by said decoding information reading means.

3. An information handling system according to claim 2, wherein said first storage medium consists of a magnetic recording medium.

4. An information handling system according to claim 2, wherein said second storage medium consists of an optical recording medium.

5. An information handling system according to claim 4, wherein said optical recording medium consists of at least one region defined in association with said first storage medium and having a selective reflectivity.

6. An information handling system according to claim 4, wherein said first storage medium consists of a flexible disk, and said region for said second storage medium is defined on a casing of said flexible disk.

7. An information handling system according to claim 1, wherein first information handling means consists of a signal transmitter while said second information handling means consists of a receiver, and said decoding information carrying means is incorporated in key means which allows the use of said receiver.

8. An information handling system according to claim 7, wherein said key means consists of an ID card, and said decoding information carrying means consists of decoding information recording means provided in said ID card.

9. An information handling system according to claim 7, wherein said key means consists of a mechanical key, and said decoding information carrying means consists of decoding information recording means provided in said ID card.

10. An information recording system for writing information into a recording medium with a writer and reading the thus recorded information with a reader, wherein:
said information recording medium comprises first information recording means for recording coded information, and second information recording means, different from said first recording means, for recording decoding information needed for decoding said coded information;
said writer comprises means for encoding information that is to be recorded in said first recording means; and
said reader comprises means for optically accessing said second information recording means and reading said decoding information, and means for decoding said encoded information according to said decoding information read by said reader;
said information encoded by said writer being recording in said first recording means, and said reader decoding and producing the information recorded in said first information recording means according to said decoding information recorded in said second recording means.

11. An information recording system according to claim 10, wherein said second information recording means comprises a plurality of regions each of which represents information by diffracting, reflecting or polarizing incident light into a specific direction.

12. An information communicating system for communicating information from transmitting means to receiving means, and producing said transmitted information, comprising:
encoding means provided in said transmitting means for encoding information to be communicated;
key means provided with optically accessible decoding information recording means for recording decoding information for decoding said coded information;
reading means provided in said receiving means for reading said decoding information by optically accessing said decoding information recording means; and
decoding means provided in said receiving means for decoding said encoded information according to said decoding information that has been read from said decoding information recording means;
said information encoded and transmitted by said transmitting means being received by said receiving means, and decoded and produced by said decoding means according to said decoding information recorded in said decoding information recording means.
